# FASCICULE DE BREVET EUROPEEN

(11) **EP 1 136 719 B1**
(45) Date de publication et mention de la délivrance du brevet: **19.11.2003**
(21) Numéro de dépôt: 01400566.4
(22) Date de dépôt: 05.03.2001
(51) Int. Cl.: F16F 9/10

(54) **Amortisseur de vibrations notamment pour rotor d'hélicoptère**
Schwingungsdämpfer, insbesondere für Hubschrauberrotor
Vibration damper, in particular for helicopter rotor

(30) Priorité: 20.03.2000 FR 0003525
(43) Date de publication de la demande: 26.09.2001
(73) Titulaire: HUTCHINSON, 75008 Paris (FR)
(72) Inventeur: Levallard, Patrice, 94360 Bry sur Marne (FR); Sieg, Thierry, Encinitas CA 92024 (US); Runfola, Marc, 92130 Issy les Moulineaux (FR)
(74) Mandataire: Jacquard, Philippe Jean-Luc

(56) Documents cités:
- EP-B- 0 329 788
- FR-A- 2 754 579
- US-A- 5 286 013

## Description

La présente invention a pour objet un amortisseur de vibrations, notamment pour rotor d'hélicoptère, comprenant un élément menant ayant un axe dit axe principal et destiné à être entraîné par un élément d'entraînement, ainsi qu'un élément rigide destiné à être monté sur une structure, et comportant un ensemble d'amortissement reliant fonctionnellement l'élément menant et l'élément rigide pour amortir les vibrations dans au moins une direction perpendiculaire audit axe principal.

La demande de Brevet Français FR 2 754 579 déposée par la Société Demanderesse le 15 Octobre 1996 et publiée le 17 Avril 1998, décrit un amortisseur de ce type dans lequel l'ensemble d'amortissement comporte, d'une part, un dispositif hydraulique d'amortissement disposé dans une cavité de fluide visqueux et d'autre part un dispositif flexible présentant une raideur élevée dans une direction parallèle audit axe principal et une faible raideur dans la direction perpendiculaire à l'axe principal. Le dispositif hydraulique d'amortissement est constitué par un premier et un deuxième ensembles de lames planes dont chacune a son plan perpendiculaire à l'axe principal, le premier ensemble étant solidaire de l'élément menant et le deuxième ensemble étant solidaire de l'élément rigide, les lames du premier et du deuxième ensembles étant disposées de manière imbriquée et étant étroitement espacées de manière à présenter des zones d'amortissement visqueux situées chacune entre une lame du premier ensemble et une lame du deuxième ensemble.

Le dispositif d'amortissement à lames planes imbriquées tel que décrit dans la demande précitée permet d'obtenir de bonnes performances et une bonne linéarité pour des vibrations de faible ou de moyenne amplitude. Cependant, au fur et à mesure que les amplitudes de débattement augmentent, la vitesse relative des lames tend également à augmenter, ce qui entraîne une augmentation du cisaillement et une diminution de la viscosité dynamique, ce qui fait que l'amortissement procuré par le dispositif hydraulique tend à baisser.

On connaît par ailleurs des dispositifs d'amortissement visqueux qui permettent d'obtenir un amortissement élevé pour des débattements de grande amplitude puisque l'amortissement procuré est proportionnel au carré de la vitesse, mais ils présentent par contre une faible efficacité pour des faibles amplitudes.

La présente invention se propose de réaliser un amortisseur de vibrations, notamment pour rotor d'hélicoptère, qui présente un amortissement satisfaisant à la fois pour les débattements de basse amplitude et de haute amplitude.

L'idée de base de l'invention est de concevoir l'amortisseur de telle sorte que, pour les faibles amplitudes, l'amortissement soit essentiellement réalisé grâce à des ensembles de lames tel que définies ci-dessus, alors que, pour de fortes amplitudes, c'est un dispositif de type à amortissement visqueux qui vient compléter et/ou réaliser l'amortissement.

L'amortisseur de vibrations selon l'invention est ainsi caractérisé en ce que le dispositif hydraulique d'amortissement comporte également un élément d'amortissement qui est disposé dans une dite cavité de fluide visqueux et qui est solidaire de l'élément menant, ledit élément d' amortissement présentant un contour externe se rétrécissant depuis une base située du côté d'une extrémité axiale de l'amortisseur jusqu'à un sommet situé du côté des ensembles de lames planes précitées.

A basse amplitude, l'élément d'amortissement est relativement écarté de la paroi de la ou des cavités et l'amortissement est majoritairement procuré par les ensembles de lames. Par contre, à forte amplitude, le dispositif flexible tend à se déformer et au fur et à mesure que les amplitudes augmentent, le contour externe de l'élément d'amortissement se rapproche au moins localement de la paroi de la cavité d'où une augmentation de l'effet d'amortissement visqueux dans la direction où se produit la déformation, d'une part, en raison du fait que la section de passage se rétrécit et d'autre part, en raison de la non-linéarité de cet effet qui, comme on l'a vu ci-dessus, est proportionnel au carré de la vitesse.

En particulier, l'élément d'amortissement s'inscrit dans un contour de déformation maximale de la surface interne du dispositif flexible. Préférentiellement, le contour extérieur de l'élément d'amortissement est inscrit à une distance prédéterminée dudit contour de déformation maximale du dispositif flexible.

Avantageusement, le contour externe de l'élément d'amortissement présente une section formée par des segments de droite inclinés par rapport audit axe principal.

De manière préférentielle, le sommet de l'élément d'amortissement est elliptique et la base est un cercle, ou un cercle interrompu par des segments de droite.

Il est particulièrement avantageux que l'élément d'amortissement soit creux et présente une cavité de compensation de volume qui communique avec au moins une dite cavité de fluide visqueux et dans laquelle est disposé un élément de compensation de volume, en particulier une membrane élastique.

De préférence, lorsque l'amortisseur est porté à sa température minimale de fonctionnement, la membrane élastique ne forme pas de pli et reste à distance d'une paroi interne de l'élément d'amortissement.

Le contour externe d'au moins une cavité de fluide visqueux peut être allongé selon une première direction. Au moins la base de l'élément d'amortissement peut être allongée selon une deuxième direction perpendiculaire à la première direction. Ceci permet d'obtenir des caractéristiques d'amortissement différentes selon les première et deuxième directions, avec un débattement plus important dans la première direction.

Un dispositif du type décrit dans la Demande Française précitée comprend un dispositif de compensation de volume. Les dispositifs de compensation de volume sont utilisés de longue date dans les systèmes hydrauliques, notamment sous forme d'accumulateurs hydrauliques, par exemple OLAER ou LEDUC, et ils le sont également depuis longtemps dans les amortisseurs de vibrations précités. Dans la Demande Française précitée, le dispositif de compensation de volume présente une membrane ondulée, dont une face est en contact avec le fluide de la cavité et dont l'autre face est en contact avec une cavité contenant du gaz. Ce dispositif présente l'inconvénient d'une certaine vulnérabilité de la membrane.

A cet effet, un mode d'exécution de l'invention présente une cavité de compensation de volume qui communique avec ladite au moins une cavité de fluide visqueux et à l'intérieur de laquelle est disposée une membrane élastique dont une paroi interne délimite une cavité de volume variable remplie par un gaz, et dont une paroi externe, qui délimite avec une paroi interne de ladite cavité de compensation de volume, une cavité de fluide de compensation, la membrane élastique étant disposée à une distance déterminée non nulle de ladite paroi interne, et sans former de pli, lorsque l'amortisseur de vibrations est à sa température minimale de fonctionnement prévu par ses spécifications.

De la sorte, on assure une efficacité de la compensation de volume dans toutes les conditions où l'amortisseur est susceptible de se trouver et d'autre part la paroi interne de la cavité de compensation permet d'assurer une protection de la membrane élastique.

La cavité de compensation est avantageusement formée à l'intérieur d'une pièce creuse évasée s'étendant entre le dispositif hydraulique d'amortissement et une extrémité axiale de l'amortisseur.

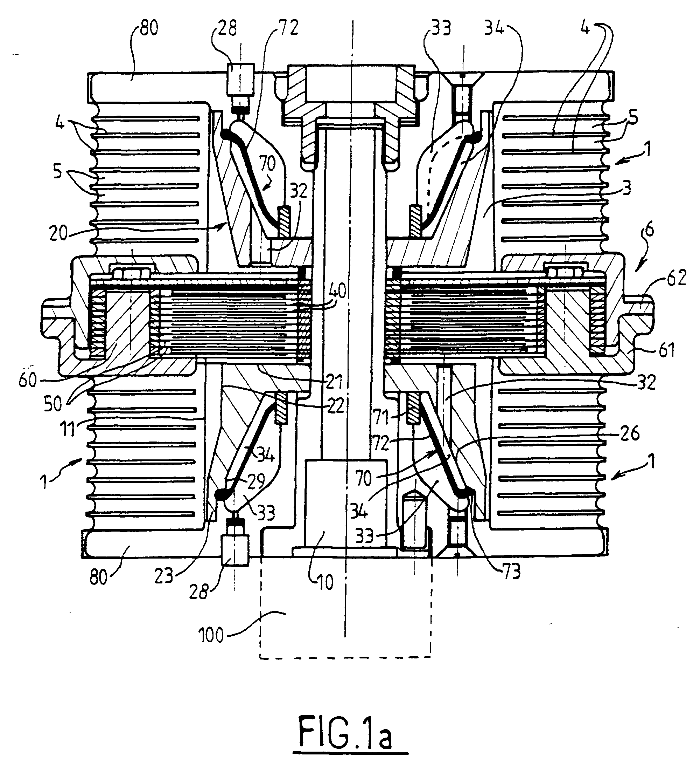

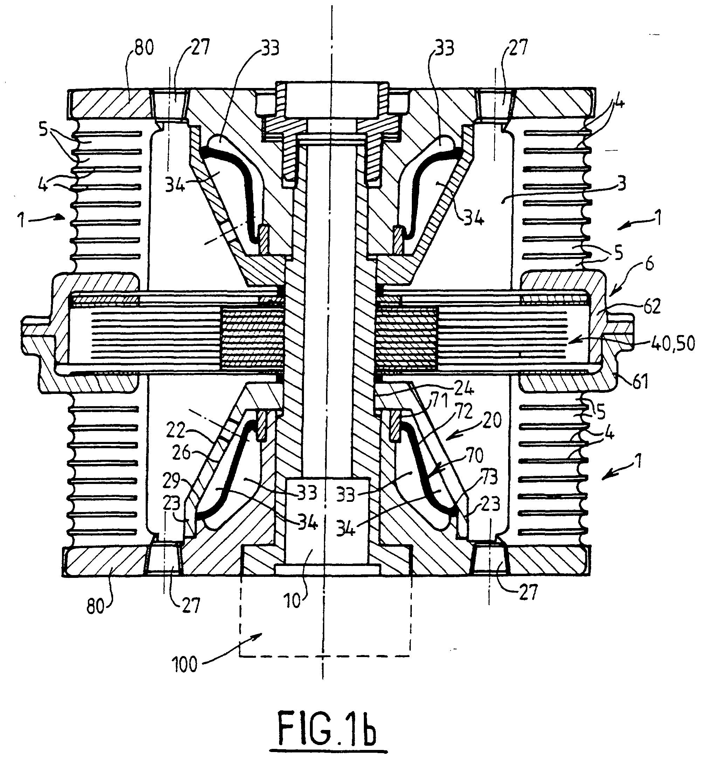

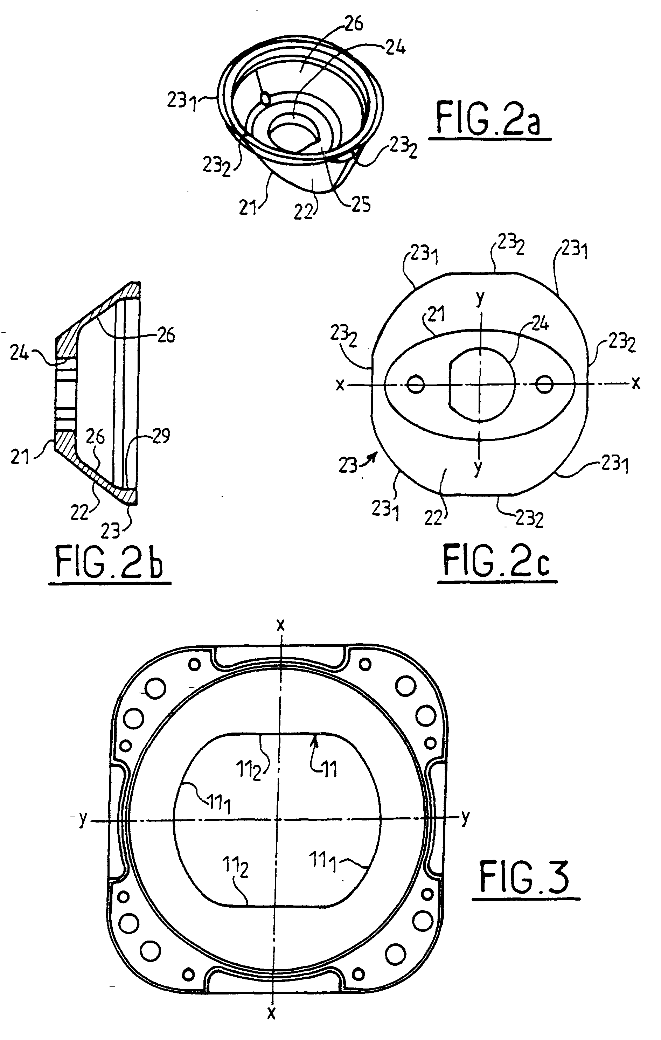

D'autres avantages de l'invention apparaîtront mieux à la lecture de la description qui va suivre, donné à titre d'exemple non limitatif, en liaison avec les dessins dans lesquels :
■ Les figures 1a et 1b représentent deux coupes longitudinales dans des plans perpendiculaires d'un amortisseur selon un mode de réalisation préféré de l'invention ;
■ Les figures 2a à 2c représentent respectivement en perspective, en coupe et en vue de dessus un élément d'amortissement selon un mode préféré de réalisation de l'invention ;
■ La figure 3 illustre le contour externe de la ou des cavités des fluides.

Comme le montrent les figures 1a et 1b, l'amortisseur de vibrations présente un élément menant 10 dont l'axe est l'axe principal de l'amortisseur et qui est destiné à être entraîné par un élément d'entraînement 100. Un premier ensemble de lames 40 est solidaire, à un découplage près, de l'élément menant 10 alors qu'un deuxième ensemble de lames 50 imbriqué avec le premier ensemble est solidaire, à un découplage près d'un élément rigide 6. Dans l'exemple représenté, un découplage des excitations de compression est obtenu grâce à un recouvrement partiel des lames, mais cette fonction pourrait être réalisée par tout autre moyen décrit dans la Demande FR 2 754 579 précitée.

Dans l'exemple représenté, la structure est symétrique par rapport à un plan médian perpendiculaire à l'axe principal de l'élément menant 10. L'ensemble de lames 40 et 50 est disposé en position médiane et est centré par rapport à un dispositif flexible 1 qui comporte une structure lamifiée constituée d'un empilement de rondelles métalliques 4 et de rondelles en élastomère 5 dont le plan est perpendiculaire à l' axe du cylindre 10. La structure lamifiée 1 présente un contour interne 11 qui délimite le contour externe de deux cavités 3 situées de part et d'autre de l'ensemble de lames 40 et 50 et qui sont remplies d'un fluide visqueux qui baigne également les lames et l'espace situé entre celles-ci de manière à procurer l'amortissement recherché.

A sa partie supérieure et à sa partie inférieure, c'est-à-dire à ses extrémités axiales, le dispositif est refermé par des couvercles 80 auxquelles sont solidarisées des éléments d'amortissement 20 qui comportent un sommet 21 situé à proximité de l'ensemble de lames 40 et 50, et une base 23, le sommet 21 et la base 23 étant reliés par un contour extérieur 22 qui s'évase progressivement du sommet 21 vers la base 23.

Avantageusement, l'élément d'amortissement 20 est creux et délimite une cavité d'amortissement séparée en deux cavités d'air 33 et de fluide 34 par une membrane 70 logée à son sommet 71 au voisinage d'une face interne 25 de l'élément 20 et qui est pincée à sa base 73 entre la base 23 de l'élément d'amortissement 20 et le couvercle 80. La membrane 70 présente une région active 72 qui longe une paroi interne évasée 26 qui délimite vers l'extérieur la cavité 34. La cavité de fluide 34 communique avec la cavité 3 par une ou plusieurs ouvertures 31 afin de procurer l'effet de compensation de volume recherché.

On notera également les ouvertures 27 permettant le remplissage des cavités 3, ainsi que les ouvertures 28 pour le remplissage en gaz des cavités 33 correspondant à l'intérieur des membranes élastiques 70, par exemple en élastomère. Ce remplissage peut impliquer une pressurisation du gaz. Le système de compensation peut être tout système élastique, par exemple un système associant un piston et ressort.

On notera également les plaques d'assemblage 60 situées de part et d'autre des ensembles de lames 40 et 50 et qui présentent des ouvertures (figure 1b) de passage du fluide visqueux remplit les cavités 3. Des entretoises permettent d'assurer l'empilement du couvercle 80, des éléments d'amortissement 20 et des ensembles 40 et 50 de lames le long de l'axe 10 alors que, sur la partie externe des brides complémentaires 61 et 62 servent à l'assemblage au niveau du dispositif flexible lamifié 1 où l'empilement étant également assuré grâce au couvercle 80.

L'élément d'amortissement 20 est préférentiellement réalisé sous la forme d'une coupe qui présente un sommet 21 présentant une ouverture centrale circulaire 24 et un contour externe sensiblement elliptique 21 ainsi qu'une base 23 présentant des portions de cercle 23₁ reliées entre elles par des segments de droite 23₂.Le contour extérieur 22 présente en coupe des segments de droite qui relient le contour elliptique du sommet 21 et le contour de la base 23.

Le contour extérieur évasé 22 permet d'inscrire l'élément 20 dans le contour des déformations maximales du dispositif lamifié 1 dans les conditions de fonctionnement les plus sévères, mais ceci avec un jeu qui est choisi en fonction de l'amortissement désiré. De ce fait, on est certain d'une part que le contour externe 22 de l'élément d'amortissement 20 ne viendra jamais en contact avec le contour interne 11 des structures lamifiées 1 et ce même dans les conditions de fonctionnement les plus sévères, et que l'élément d'amortissement 20 apportera un effet d'amortissement important pour des débattements de grande amplitude.

Comme représenté à la figure 3, le contour 11 qui définit l'extérieur des cavités 3 présente une forme allongée limitée aux extrémités par des arcs de cercle 11₁ qui se raccordent par des segments de droite 11₂. On a indiqué à la figure 2c par XX le grand axe de l'ellipse 21 et par YY son petit axe et on a reporté ces directions à la figure. 3 pour indiquer la position relative de la pièce 20 par rapport à l'élément 1. La coupe de la figure la est réalisée selon le plan contenant l'axe XX et l'axe principal, alors que la coupe de la figure 1b est réalisée selon le plan contenant l'axe YY et l'axe principal. La direction YY correspond aux plus grands débattements possibles de l'élément d'amortissement.

Comme le montrent plus particulièrement les figures 1a et 1b, à la température minimale de fonctionnement, la partie active 72 de la membrane élastique 70 suit la paroi interne 26 de l'élément 20 à une distance résiduelle donnée et sans former de pli, ce qui permet de maintenir l'efficacité de la compensation de volume dans toutes les conditions de fonctionnement. A température ambiante (20°C), la membrane 70 occupe la position représentée en pointillés à la figure la. Au fur et à mesure que la température baisse, le fluide visqueux se contracte, et cette contraction produit une diminution du volume des cavités 34. Du fait que la membrane 70 ne présente pas de pli, elle se contracte de manière uniforme et vient longer la paroi 26 sans former de pli. L'absence de pli à la température minimale de fonctionnement permet d'éviter que la membrane 70 ne vienne localement en contact avec la paroi interne 26, ce qui diminuerait l'efficacité de la compensation de volume en isolant une partie de la cavité de fluide 34.

## Revendications

1. Amortisseur de vibrations, notamment pour rotor d'hélicoptère, comprenant un élément menant (10) ayant un axe dit axe principal et destiné à être entraîné par un élément d'entraînement (100) ainsi qu'un élément rigide (6) destiné à être monté sur une structure, et comportant un ensemble d'amortissement reliant fonctionnellement l'élément menant (10) et l'élément rigide (6) pour amortir les vibrations dans au moins une direction perpendiculaire audit axe principal, l'ensemble d'amortissement comportant d'une part un dispositif hydraulique d'amortissement disposé dans au moins une cavité (3) de fluide visqueux et d'autre part un dispositif flexible (1) présentant une raideur élevée dans une direction parallèle audit axe principal et une faible raideur dans ladite direction perpendiculaire à l'axe principal, le dispositif hydraulique d'amortissement présentant un premier (40) et un deuxième (50) ensembles de lames planes dont chacune a son plan perpendiculaire à l'axe principal, le premier ensemble (40) étant monté sur l'élément menant (10) par l'intermédiaire d'une première liaison mécanique et le deuxième ensemble (50) étant monté sur l'élément rigide (6) par l'intermédiaire d'une deuxième liaison mécanique (60), les lames (40, 50) du premier (40) et du deuxième (50) ensembles étant disposées de manière imbriquée et étant étroitement espacées de manière à présenter des zones d'amortissement visqueux situées chacune entre une lame (40) du premier ensemble et une lame (50) du deuxième ensemble **caractérisé en ce que** le dispositif hydraulique d'amortissement comporte également au moins un élément d'amortissement (20) qui est disposé dans ladite au moins une cavité (3) de fluide visqueux et qui est solidaire de l'élément menant (10), ledit élément d'amortissement (20) présentant un contour externe (22) se rétrécissant depuis une base (23) située du côté d'une extrémité axiale de l'amortisseur jusqu'à un sommet (21) situé du côté des ensembles (40, 50) de lames planes.

2. Amortisseur de vibrations selon la revendication 1 **caractérisé en ce que** le contour extérieur (22) de l'élément d'amortissement (20) s'inscrit dans un contour de déformation maximale de la surface interne (11) du dispositif flexible (1).

3. Amortisseur de vibrations selon la revendication 1, **caractérisé en ce que** le contour extérieur (22) de l'élément d'amortissement est inscrit à une distance prédéterminée dudit contour de déformation maximale.

4. Amortisseur de vibrations selon une des revendications précédentes, **caractérisé en ce que** le contour externe (22) de l'élément d'amortissement présente une section formée par des segments de droite inclinés par rapport audit axe principal.

5. Amortisseur de vibrations selon une des revendications précédentes, **caractérisé en ce que** le contour externe d'au moins une cavité (3) de fluide visqueux est allongé selon une première direction (YY) perpendiculaire à l'axe principal.

6. Amortisseur de vibrations selon la revendication 5, **caractérisé en ce qu'**au moins la base de l'élément d'amortissement est allongée selon une deuxième direction (XX) perpendiculaire à la première direction(YY)

7. Amortisseur de vibrations selon une des revendications 4 à 6, **caractérisé en ce que** le sommet (21) de l'élément d'amortissement (20)est elliptique et **en ce que** sa base est un cercle ou un cercle interrompu par des segments de droite.

8. Amortisseur de vibrations selon une des revendications précédentes, **caractérisé en ce que** l'élément d'amortissement (20) est creux et présente une cavité de compensation de volume qui communique avec au moins une dite cavité (3) de fluide visqueux et dans laquelle est disposé un élément de compensation de volume (70).

9. Amortisseur de vibrations selon la revendication 8, **caractérisé en ce que** l'élément de compensation de volume est une membrane élastique (70).

10. Amortisseur de vibrations selon la revendication 9, **caractérisé en ce que**, lorsqu'il est à une température minimale de fonctionnement, la membrane élastique (70) ne présente pas de pli et reste à distance d'une paroi interne (26) de l'élément d'amortissement (20).

## Patentansprüche

1. Schwingungsdämpfer, insbesondere für einen Hubschrauberrotor, der ein getriebenes Element (10), das eine als Hauptachse bezeichnete Achse hat und dazu bestimmt ist, durch ein Antriebselement (100) angetrieben zu werden, und ein starres Element (6) aufweist, das dazu bestimmt, an einer Struktur befestigt zu werden, und das eine Dämpfungsbaugruppe hat, die das getriebene Element (10) und das starre Element (6) funktionell verbindet, um die Schwingungen in zumindest einer Richtung senkrecht zur Hauptachse zu dämpfen, wobei die Dämpfungsbaugruppe einerseits eine hydraulische Dämpfungsvorrichtung, die sich in zumindest einem Hohlraum (3) mit viskosem Fluid befindet, und andrerseits eine flexible Vorrichtung (1) aufweist, die eine erhöhte Starrheit in einer Richtung parallel zur Hauptachse und eine geringe Starrheit in der Richtung senkrecht zur Hauptachse aufweist, wobei die hydraulische Dämpfungsvorrichtung eine erste (40) und eine zweite (50) Baugruppe von ebenen Lamellen aufweist, bei denen die jeweilige Ebene senkrecht zur Hauptachse verläuft, wobei die erste Baugruppe (40) an dem getriebenen Element mittels einer ersten mechanischen Verbindung montiert ist und die zweite Baugruppe (50) an dem starren Element (6) mittels einer zweiten mechanischen Verbindung (60) montiert ist, wobei die Lamellen (40, 50) der ersten (40) und der zweiten (50) Baugruppe zueinander versetzt angeordnet sind und in einer solchen Weise eng beabstandet vorgesehen sind, dass viskose Dämpfungszonen gebildet werden, die sich jeweils zwischen einer Lamelle (40) der ersten Baugruppe und einer Lamelle (50) der zweiten Baugruppe befinden,
**dadurch gekennzeichnet, dass** die hydraulische Dämpfungsvorrichtung (20) ebenfalls zumindest ein Dämpfungselement (20) aufweist, das sich in dem zumindest einen Hohlraum (3) mit viskosem Fluid befindet und das mit dem getriebenen Element (10) fest verbunden ist, wobei das Dämpfungselement (20) eine Außenkontur (22) aufweist, die sich vom Grundabschnitt (23), der sich an der Seite von einem axialen Endabschnitt des Dämpfers befindet, zu einem Spitzenabschnitt (21), der sich an der Seite der Baugruppen (40, 50) mit ebenen Lamellen befindet, verengt.

2. Schwingungsdämpfer nach Anspruch 1, **dadurch gekennzeichnet, dass** sich die Außenkontur (22) des Dämpfungselements (20) in eine Maximalverformungskontur der Innenfläche (11) der flexiblen Vorrichtung (1) einfügt.

3. Schwingungsdämpfer nach Anspruch 1, **dadurch gekennzeichnet, dass** die Außenkontur (22) des Dämpfungselements mit einem vorbestimmten Abstand zur Maximalverformungskontur eingefügt ist.

4. Schwingungsdämpfer nach einem der vorhergehenden Ansprüche, **dadurch gekennzeichnet, dass** die Außenkontur (22) des Dämpfungselements einen Querschnitt bildet, der durch Geradensegmente gebildet ist, die bezüglich der Hauptachse geneigt sind.

5. Schwingungsdämpfer nach einem der vorhergehenden Ansprüche, **dadurch gekennzeichnet, dass** die Außenkontur von zumindest einem Hohlraum (3) mit viskosem Fluid in einer ersten Richtung (YY) senkrecht zur Hauptachse länglich ist.

6. Schwingungsdämpfer nach Anspruch 5, **dadurch gekennzeichnet, dass** zumindest der Grundabschnitt des Dämpfungselements entsprechend einer zweiten Richtung (XX) senkrecht zur ersten Richtung (YY) länglich ist.

7. Schwingungsdämpfer nach einem der Ansprüche 4 bis 6, **dadurch gekennzeichnet, dass** der Spitzenabschnitt (21) des Dämpfungselements (20) elliptisch ist und dass der Grundabschnitt ein Kreis oder ein von Geradensegmenten unterbrochener Kreis ist.

8. Schwingungsdämpfer nach einem der vorhergehenden Ansprüche, **dadurch gekennzeichnet, dass** das Dämpfungselement (20) hohl ist und einen Volumenausgleichhohlraum aufweist, der mit zumindest einem genannten Hohlraum (3) mit viskosem Fluid in Verbindung steht und in dem sich ein Volumenausgleichelement (70) befindet.

9. Schwingungsdämpfer nach Anspruch 8, **dadurch gekennzeichnet, dass** das Volumenausgleichelement eine elastische Membran (70) ist.

10. Schwingungsdämpfer nach Anspruch 9, **dadurch gekennzeichnet, dass**, wenn dieser bei seiner minimalen Betriebstemperatur ist, die elastische Membran (70) keine Falten aufweist und bezüglich einer Innenwand (26) des Dämpfungselements (20) in einem Abstand verbleibt.

## Claims

1. Vibration damper, in particular for a helicopter rotor, comprising a driving element (10) having an axis referred to as the principal axis and designed to be impelled by an impelling element (100) as well as a rigid element (6) designed to be mounted on a structure, and including a damping assembly functionally connecting the driving element (10) and the rigid element (6) so as to dampen vibrations in at least one direction perpendicular to the said principal axis, the damping assembly comprising on the one hand a damping hydraulic device positioned in at least one viscous fluid cavity (3) and on the other hand a flexible device (1) having a high degree of stiffness in a direction parallel to the said principal axis, the hydraulic damping device having a first (40) and a second (50) assembly of flat laminations, each of which has its plane perpendicular to the principal axis, the first assembly (40) being mounted on the driving element (10) via a first mechanical linkage and the second assembly (50) being mounted on the rigid element (6) via a second mechanical linkage (60), the laminations (40, 50) of the first (40) and second (50) assemblies being positioned in an interleaved manner and being closely spaced apart so as to present viscous damping zones, each situated between a lamination (40) of the first assembly and a lamination (50) of the second assembly, **characterised in that** the hydraulic damping device also includes at least one damping element (20) that is positioned in the said at least one viscous fluid cavity (3) and that is secured to the drive element (10), the said damping element (20) having an external contour (22) narrowing from a base (23) situated on the side of an axial extremity of the damper to an apex (21) situated on the side of the assemblies (40, 50) of flat laminations.

2. Vibration damper according to claim 1, **characterized in that** the external contour (22) of the damping element (20) is inscribed in a maximum deformation contour of the internal surface (11) of the flexible device (1).

3. Vibration damper according to claim 1, **characterized in that** the external contour (22) of the damping element is inscribed at a predetermined distance from the said maximum deformation contour.

4. Vibration damper according to one of the preceding claims, **characterized in that** the external contour (22) of the damping element has a section formed of straight segments inclined with respect to the said principal axis.

5. Vibration damper according to one of the preceding claims, **characterized in that** the external contour of at least one viscous fluid cavity (3) is elongated in a first direction (YY) perpendicular to the principal axis.

6. Vibration damper according to claim 5, **characterized in that** at least the base of the damping element is elongated in a second direction (XX) perpendicular to the first direction (YY).

7. Vibration damper according to one of claims 4 to 6, **characterized in that** the apex (21) of the damping element (20) is elliptical and **in that** its base is a circle or a circle interrupted by straight segments.

8. Vibration damper according to one of the preceding claims, **characterized in that** the damping element (20) is hollow and has a volume compensation cavity that communicates with at least one said viscous fluid cavity (3) and in which a volume compensation element (70) is positioned.

9. Vibration damper according to claim 8, **characterized in that** the volume compensation element is an elastic membrane (70).

10. Vibration damper according to claim 9, **characterized in that**, when it is at a minimum operating temperature, the elastic membrane (70) does not have a fold and remains at a distance from an internal wall (26) of the damping element (20).
